# EUROPÄISCHE PATENTSCHRIFT

(11) **EP 0 741 865 B1**
(45) Veröffentlichungstag und Bekanntmachung des Hinweises auf die Patenterteilung: **26.07.2006**
(21) Anmeldenummer: 95932617.4
(22) Anmeldetag: 23.09.1995
(51) Int. Cl.: G01N 27/407, G01N 27/406

(54) **SENSORELEMENT**
SENSOR
ELEMENT DE DETECTION

(30) Priorität: 20.10.1994 DE 4437507
(43) Veröffentlichungstag der Anmeldung: 13.11.1996
(73) Patentinhaber: ROBERT BOSCH GMBH, 70442 Stuttgart (DE)
(72) Erfinder: FRIESE, Karl-Hermann, D-71229 Leonberg (DE)
(86) Internationale Anmeldenummer: PCT/DE1995/001320
(87) Internationale Veröffentlichungsnummer: WO 1996/012947

(56) Entgegenhaltungen:
- EP-A- 0 133 820
- EP-A- 0 189 038
- EP-A- 0 686 847
- WO-A-95/25277
- DE-A- 1 809 622

## Beschreibung

Die Erfindung betrifft ein Sensorelement nach dem Oberbegriff der Ansprüche 1 und 2.

### Stand der Technik

Sensorelemente der gattungsgemäßen Art sind bekannt. Diese werden beispielsweise bei elektrochemischen Meßfühlern eingesetzt und weisen einen zwischen zwei Elektroden liegenden, ionenleitenden Festkörperelektrolyten auf. Die Meßfühler können beispielsweise als Abgassensoren in Kraftfahrzeugen eingesetzt werden. Zum Schutz der Elektroden und/oder von die Elektroden kontaktierenden Leiterbahnen ist es bekannt, diese mit einer porösen Deckschicht zu versehen, so daß das Meßgas, beispielsweise das Abgas eines Kraftfahrzeuges, durch die Deckschicht hindurchtreten und auf den Festkörperelektrolyten (keramisches Grundelement) beziehungsweise die Elektrode treffen kann. Aus der GB 1,201,806 ist beispielsweise ein derartiges Sensorelement bekannt. Auf einem aus Zirkondioxid bestehenden Festkörperelektrolyten ist eine Elektrode aufgebracht, die von einer Deckschicht überzogen ist, die ebenfalls aus Zirkonoxid besteht.

Die allgemeine Wirkungsweise eines derartigen Sensorelementes ist bekannt und soll hier nicht näher erläutert werden. Beim Betrieb derartiger Sensorelemente können diese einen plötzlichen Temperaturschock erfahren. Dieser Temperaturschock kann beispielsweise durch Auftreffen von Schwallwasser auf das Sensorelement bewirkt werden. Hierbei ist nachteilig, daß die poröse Deckschicht gegenüber dem keramischen Grundelement des Sensorelementes eine plötzliche Temperaturdifferenz aufweist, die zu einer Kontraktion im Oberflächenbereich und damit zu kritischen mechanischen Spannungen innerhalb des Sensorelementes führt. Die Spannungen können zu Brüchen und damit Ausfällen der Sensorelemente führen.

Aus der EP 0 189 038 A3 ist ein planares Sensorelement bekannt, das einen ersten keramischen Grundkörper aufweist, der eine elektrochemische Zelle mit Elektroden und mindestens einem Gasraum enthält und als keramisches Grundmaterial mit Yttrium stabilisiertes Zirkonoxid aufweist. Das Sensorelement weist einen zweiten keramischen Grundkörper auf, der einen Heizer enthält und aus Aluminiumoxid besteht. Der erste keramische Grundkörper ist in den zweiten keramischen Grundkörper eingebettet. Zwischen den beiden Grundkörpern ist eine Zwischenschicht vorgesehen. Zur Absorption von durch thermischen Schock auftretenden Spannungen enthält die Zwischenschicht Risse. Das Verhältnis der thermischen Ausdehnungskoeffizienten von erstem keramischem Grundkörper (ZrO₂) : Zwischenschicht : zweitem keramischem Grünkörper (Al₂O₃) liegt bei 7 : 10-15:21.

Weiterhin ist aus der WO 95/25277 und aus der EP 0 686 847 bekannt, eine Platin-Elektrode mit einer Schutzschicht zu bedecken, die aus Aluminiumoxid, aus Murit, aus einem Spinell oder aus TiO₂ besteht.

### Vorteile der Erfindung

Das erfindungsgemäße Sensorelement mit den im Anspruch 1 oder 2 genannten Merkmalen bietet demgegenüber den Vorteil, daß diese Sensorelemente eine verbesserte Temperaturschockfestigkeit aufweisen. Dadurch, daß die Deckschicht oder eine Beschichtung der Deckschicht einen thermischen Ausdehnungskoeffizienten aufweisen, der zumindest im Bereich der Anwendungstemperaturen des Sensorelementes kleiner ist als der thermische Ausdehnungskoeffizient des keramischen Grundkörpers, wird beim Auftreten einer plötzlichen äußeren Temperatursenke die äußere Deckschicht oder die Beschichtung nur in einem geringen Umfang aufgrund der plötzlichen Abkühlung kontrahiert. Der Temperaturschock wird von der Deckschicht oder der Beschichtung aufgenommen, ohne daß es zu Zugspannungen beziehungsweise nur in sehr begrenztem Umfang zu Zugspannungen kommen kann. Auf Grund des unterschiedlichen thermischen Temperaturkoeffizienten zwischen dem Grundkörper und der Deckschicht beziehungsweise der Beschichtung wird erst eine Druckverspannung der Deckschicht beziehungsweise der Beschichtung abgebaut, so daß die das Sensorelement zerstörenden Zugspannungen nicht mehr auftreten können, da nach Abbau der Druckverspannung der Temperaturausgleich innerhalb des Sensorelementes wieder hergestellt ist beziehungsweise die plötzlich aufgetretene Temperatursenke (beispielsweise Schwallwasser) ihre Wirkung verloren hat.

Vorteilhafte Ausgestaltungen der Erfindung ergeben sich aus den in den Unteransprüchen genannten Merkmalen.

### Zeichnung

Die Erfindung wird nachfolgend in Ausführungsbeispielen an Hand der zugehörigen Zeichnungen näher erläutert. Es zeigen:
- Figur 1: eine schematische Schnittdarstellung durch ein Sensorelement;
- Figur 2: eine ausschnittsweise Vergrößerung des Sensorelementes in einer ersten Ausführungsvariante und
- Figur 3: eine ausschnittsweise Vergrößerung des Sensorelementes in einer zweiten Ausführungsvariante.

### Beschreibung der Ausführungsbeispiele

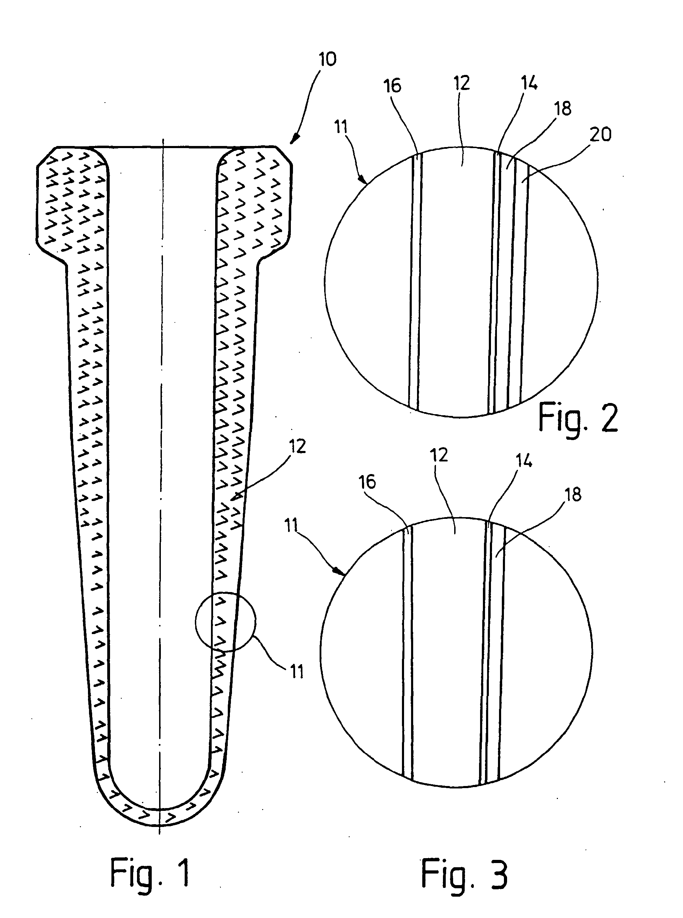

In der Figur 1 ist schematisch ein allgemein mit 10 bezeichnetes Sensorelement gezeigt. Das Sensorelement 10 besitzt eine sogenannte Fingerbauform und wird durch ein einseitig geschlossenes Rohr gebildet. Innerhalb des Sensorelementes 10 kann ein nicht dargestelltes Heizelement angeordnet sein, das eine Erwärmung des Sensorelementes 10 auf eine notwendige Anwendungstemperatur ermöglicht. Das Sensorelement 10 ist zur Montage in ein nicht dargestelltes Gehäuse eingebracht und mit seiner Außenseite einem Meßgas und seiner Innenseite einem Referenzgas ausgesetzt. Das Sensorelement 10 besitzt einen keramischen Grundkörper 12, der von einem Festelektrolyten gebildet wird. Auf dem keramischen Grundkörper 12 ist - wie die in den Figuren 2 und 3 dargestellten Vergrößerungen eines mit 11 bezeichneten Wandabschnittes verdeutlichen - eine erste Elektrode 14 und an dessen entgegengesetzter Seite eine zweite Elektrode 16 angeordnet. Die Elektrode 14 ist dem Meßgas, hier beispielsweise dem Abgasstrom eines Kraftfahrzeuges ausgesetzt, während die Elektrode 16 zu Vergleichszwecken als Referenzelektrode dem Referenzgas, beispielsweise dem Luftsauerstoff, ausgesetzt ist. Sowohl die Elektrode 14 als auch die Elektrode 16 sind bereichsweise auf dem keramischen Grundkörper 12 angeordnet. Die Elektroden 14 und 16 sind über nicht dargestellte Leiterbahnen mit elektrischen Kontakten verbunden, die wiederum mit einer Auswerteschaltung verbindbar sind.

Die Elektrode 14 besitzt, gemäß dem in Figur 2 gezeigten Ausführungsbeispiel, eine poröse Deckschicht 18, die einerseits für das Abgas gasdurchlässig ist und andererseits die Elektrode 14 schützt. Die Elektrode 16 kann ebenfalls eine hier nicht dargestellte, poröse Deckschicht 18, die einen Schutz der Elektrode 16 gewährleistet, besitzen. Die Deckschicht 18 ist mit einer Beschichtung 20 versehen. Gemäß dem in Figur 3 gezeigten Ausführungsbeispiel kann auf die Beschichtung 20 verzichtet werden, so daß lediglich die poröse Deckschicht 18 die Elektrode 14 überzieht.

Im Betrieb des schematisch dargestellten Sensorelementes 10 ist der keramische Grundkörper 12 mit seiner Elektrode 14 dem Abgas und mit seiner Elektrode 16 dem Luftsauerstoff ausgesetzt, so daß sich ein Konzentrationsunterschied des Sauerstoffs ergibt. Dieser Konzentrationsunterschied führt - bekannterweise - zu einer Potentialdifferenz, die bei entsprechender Auswertung eine Ermittlung des Sauerstoffgehalts des Abgases ermöglicht. Durch den Einbauort des Sensorelementes 10 kann dieses, insbesondere von seiner dem Abgas ausgesetzten Seite, sowohl in den von Elektroden- beziehungsweise Leiterbahnschichten bedeckten Oberflächenbereichen als auch in nicht von Elektroden- beziehungsweise Leiterbahnschichten bedeckten Oberflächenbereichen, plötzlich auftretendem Schwallwasser ausgesetzt sein. Da das Sensorelement 10 zu seinem Betrieb eine Betriebstemperatur von mehr als 250 °C benötigt, führt von außen auftreffendes Schwallwasser zu einem Temperaturschock für das Sensorelement 10, so daß sich durch plötzlich auftretende Temperaturunterschiede über den Querschnitt des Sensorelementes 10 eine thermische Belastung ergibt.

Nachfolgend werden die verschiedenen Ausführungsbeispiele des in den Figuren 1 bis 3 gezeigten Sensorelementes 10 näher erläutert, wobei trotz eines teilweise unterschiedlichen Aufbaus zur Verdeutlichung die in den Figuren verwendeten Bezugszeichen einheitlich verwendet werden.

Der keramische Grundkörper 12 besteht beispielsweise aus einem mit Yttriumoxid Y₂O₃ voll- oder teilstabilisierten Zirkonoxid ZrO₂. Die Elektroden 14 und 16 bestehen aus einem Platin-Cermet, die auf den keramischen Grundkörper 12 - in hier nicht näher zu betrachtender Weise - aufgesintert sind. Im weiteren wird sich auf die Deckschicht 18 und die Beschichtung 20 bezogen.

Nach weiteren, nicht dargestellten Beispielen, kann eine Deckschicht der Elektrode 16 ebenfalls eine Beschichtung 20 aufweisen, während die Deckschicht 18 über die Elektrode 14 die Beschichtung 20 aufweist oder nicht aufweist, beziehungsweise keine der Deckschichten 18 weist eine Beschichtung 20 auf. Für die Erfindung ist lediglich wesentlich, daß die Deckschichten 18 oder die Beschichtung 20 einen niedrigeren effektiven thermischen Ausdehnungskoeffizienten aufweisen als der keramische Grundkörper 12. Der thermische Ausdehnungskoeffizient ist hierbei im Bereich der Betriebs- beziehungsweise der Anwendungstemperaturen des Sensorelementes 10 um 1,5x10⁻⁶xK⁻¹, vorzugsweise um mindestens 3,0x10⁻⁶xK⁻¹ kleiner als der thermische Ausdehnungskoeffizient des keramischen Grundkörpers 12.

Nachfolgend werden verschiedene Ausführungsbeispiele näher beschrieben:
a) Die Deckschicht 18 besteht aus einer porösen Engobe-Schutzschicht, auf die nach dem Sintern des Sensorelementes 10 eine Beschichtung 20 aus einer porösen Mullit-Schutzschicht aufgebracht ist. Die Mullit-Schutzschicht kann bei spielsweise durch Plasmaspritzen, Flammspritzen oder durch Engobieren mit anschließendem Sintern aufgebracht sein. Das Herstellungsverfahren zum Aufbringen der Beschichtung 20 ist insofern für den Kern der Erfindung nebensächlich.
b) Wie a), jedoch
   die Beschichtung 20 besteht aus einem Aluminium-Titanat. Das Aluminium-Titanat ist beispielsweise durch Flammspritzen aufgebracht.
c) Wie a), jedoch
   die poröse Mullit-Schutzschicht 20 ist direkt auf die Elektroden 14 beziehungsweise 16 aufgebracht, so daß auf die zusätzliche Anordnung einer Deckschicht 18 verzichtet werden kann, das heißt, die Beschichtung 20 bildet gleichzeitig die Deckschicht 18 aus (Figur 3).
d) Wie a), jedoch
   zwischen die Deckschichten 18 und der Beschichtung 20 ist eine weitere - in den Figuren nicht dargestellte - Schicht aus Magnesium-Spinell aufgebracht. Die Magnesium-Spinell-Schicht kann beispielsweise durch Plasmaspritzen aufgebracht sein.
e) Wie a), jedoch
   die Beschichtung 20 besteht aus einem Gemisch von 50 Vol.-% Mullit und 50 Vol.-% yttriumoxidstabilisiertem Zirkonoxid, wobei der Anteil des Yttriumoxids Y₂O₃ beispielsweise 3 mol% an dem Zirkonoxid ZrO₂ beträgt.
f) Wie e), jedoch
   die Beschichtung 20 besteht aus einem Gemisch aus 45 Gewichts-% Aluminiumoxid Al₂O₃ und 55 Gewichts-% Zirkon-Silikat ZrO₂ · SiO₂. Dieses Gemisch kann beispielsweise durch Plasmaspritzen aufgebracht werden, so daß sich während des Plasmaspritzens eine Mullit-Zirkonoxid-Mischung bildet.
g) Wie b), jedoch
   das Aluminium-Titanat wird als Engobe-Schlicker auf dem gesinterten Sensorkörper aufgetragen und anschließend bei ca. 1250 °C nachgesintert.
h) Wie g), jedoch
   die Beschichtung 20 wird als Cordierit-Schlicker aufgetragen und anschließend bei ca. 1300 °C gesintert.
i) Wie a), jedoch
   die Beschichtung 20 besteht aus einer Mischung von 80 % Mullit und 20 % Aluminiumoxid Al₂O₃.
j) Wie a), jedoch
   die Beschichtung 20 besteht aus einer Mischung von 80 % Mullit und 20 % Magnesium-Spinell.
k) Wie j), jedoch
   die Beschichtung 20 besteht aus einer Mischung von 50 % Mullit und 50 % Magnesium-Spinell.

Die in den genannten Beispielen aufgeführten Zusammensetzungen für die Deckschichten 18 und/oder der Beschichtung 20 führen dazu, daß bei einem plötzlich auftretenden Temperaturschock für das Sensorelement 10 diese Schichten, da diese einen geringeren thermischen Ausdehnungskoeffizienten aufweisen als der Grundkörper 12, daß der Thermoschock, das heißt, eine plötzliche Temperatursenke von den Deckschichten 18 beziehungsweise der Beschichtung 20 abgefangen werden, ohne daß das gesamte Sensorelement 10 einer kritischen Zugspannung unterworfen wird.

## Patentansprüche

1. Sensorelement mit einem keramischen Grundkörper und einer eine Außenfläche des keramischen Grundkörpers wenigstens teilweise überdeckenden porösen Deckschicht sowie mindestens einer auf dem keramischen Grundkörper angeordneten Elektrode, die aus einem Platin-Cermet besteht, **dadurch gekennzeichnet, daß** die Deckschicht (18) einen thermischen Ausdehnungskoeffizienten aufweist, der zumindest im Bereich der Anwendungstemperaturen des Sensorelements (10) kleiner ist als der thermische Ausdehnungskoeffizient des keramischen Grundkörpers (12).

2. Sensorelement mit einem keramischen Grundkörper und einer eine Außenfläche des keramischen Grundkörpers wenigstens teilweise überdeckenden porösen Deckschicht sowie mindestens einer auf dem keramischen Grundkörper angeordneten Elektrode, die aus einem Platin-Cermet besteht, **dadurch gekennzeichnet, daß** die poröse Deckschicht (18) wenigstens eine poröse Beschichtung (20) aufweist, deren thermischer Ausdehnungskoeffizient zumindest im Bereich der Anwendungstemperaturen des Sensorelements (10) kleiner ist als der thermische Ausdehnungskoeffizient des keramischen Grundkörpers (12).

3. Sensorelement nach einem der Ansprüche 1 oder 2, **dadurch gekennzeichnet, daß** die Deckschicht (18) zumindest bereichsweise eine auf der Außenfläche des keramischen Grundkörpers (12) aufgebrachte Elektrode (14) überdeckt.

4. Sensorelement nach einem der vorhergehenden Ansprüche, **dadurch gekennzeichnet, daß** der thermische Ausdehnungskoeffizient der Deckschicht (18) und/oder der Beschichtung (20) wenigstens 1,5x10⁻⁶xK⁻¹, vorzugsweise um wenigstens 3,0x10⁻⁶xK⁻¹ kleiner ist als der thermische Ausdehnungskoeffizient des keramischen Grundkörpers (12).

5. Sensorelement nach einem der vorhergehenden Ansprüche, **dadurch gekennzeichnet, daß** die Deckschicht (18) und/oder die Beschichtung (20) mindestens 5 Volumen-%, vorzugsweise mindestens 20 Volumen-% Mullit, Codierit und/oder Aluminium-Titanat enthält.

## Claims

1. Sensor element with a ceramic base body and a porous covering layer, which at least partially covers an outer surface of the ceramic base body, as well as at least one electrode, which is arranged on the ceramic base body and consists of a platinum cermet, **characterized in that** the covering layer (18) has a coefficient of thermal expansion which, at least in the range of the use temperatures of the sensor element (10), is lower than the coefficient of thermal expansion of the ceramic base body (12).

2. Sensor element with a ceramic base body and a porous covering layer, which at least partially covers an outer surface of the ceramic base body, as well as at least one electrode, which is arranged on the ceramic base body and consists of a platinum cermet, **characterized in that** the porous covering layer (18) has at least one porous coating (20), the coefficient of thermal expansion of which, at least in the range of the use temperatures of the sensor element (10), is lower than the coefficient of thermal expansion of the ceramic base body (12).

3. Sensor element according to either of Claims 1 and 2, **characterized in that** the covering layer (18), at least in regions, covers an electrode (14) which has been applied to the outer surface of the ceramic base body (12).

4. Sensor element according to one of the preceding claims, **characterized in that** the coefficient of thermal expansion of the covering layer (18) and/or of the coating (20) is at least 1.5×10⁻⁶×K⁻¹, preferably at least 3.0×10⁻⁶×K⁻¹, lower than the coefficient of thermal expansion of the ceramic base body (12).

5. Sensor element according to one of the preceding claims, **characterized in that** the covering layer (18) and/or the coating (20) contains at least 5% by volume, preferably at least 20% by volume, of mullite, cordierite and/or aluminium titanate.

## Revendications

1. Elément de détection comprenant un corps de base céramique et une couche supérieure poreuse recouvrant au moins partiellement une surface extérieure du corps de base céramique, ainsi qu'au moins une électrode disposée sur le corps de base céramique et constituée d'un cermet-platine,
**caractérisé en ce que**
la couche supérieure (18) présente un coefficient d'expansion thermique qui, au moins dans la plage des températures d'utilisation de l'élément de détection (10), est inférieur à celui du corps de base céramique (12).

2. Elément de détection comprenant un corps de base céramique et une couche supérieure poreuse recouvrant au moins partiellement une surface extérieure du corps de base céramique, ainsi qu'au moins une électrode disposée sur le corps de base céramique et constituée d'un cermet-platine,
**caractérisé en ce que**
la couche supérieure poreuse (18) présente au moins un revêtement poreux (20) dont le coefficient d'expansion thermique, au moins dans la plage des températures d'utilisation de l'élément de détection (10), est inférieur à celui du corps de base céramique (12).

3. Elément de détection selon l'une des revendications 1 ou 2,
**caractérisé en ce que**
la couche supérieure (18) recouvre au moins sur certaines zones une électrode (14) appliquée sur la surface extérieure du corps de base céramique (12).

4. Elément de détection selon l'une des revendications précédentes,
**caractérisé en ce que**
le coefficient d'expansion thermique de la couche supérieure (18) et/ou du revêtement (20) est inférieur d'au moins 1,5x10⁻⁶xK⁻¹, de préférence d'au moins 3,0x10⁻⁶xK⁻¹, à celui du corps de base céramique (12).

5. Elément de détection selon l'une des revendications précédentes,
**caractérisé en ce que**
la couche supérieure (18) et/ou le revêtement (20) contient au moins 5 % en volume de préférence au moins 20 % en volume, de mullite, de cordiérite et/ ou de titanate d'aluminium.
